(19) Europäisches Patentamt / European Patent Office / Office européen des brevets

(11) **EP 1 831 301 B1**

(12) **EUROPÄISCHE PATENTSCHRIFT**

(45) Veröffentlichungstag und Bekanntmachung des Hinweises auf die Patenterteilung:
**02.03.2011 Patentblatt 2011/09**

(21) Anmeldenummer: **05850338.4**

(22) Anmeldetag: **22.12.2005**

(51) Int Cl.:
**C08K 9/06** (2006.01)

(86) Internationale Anmeldenummer:
**PCT/EP2005/013918**

(87) Internationale Veröffentlichungsnummer:
**WO 2006/072407 (13.07.2006 Gazette 2006/28)**

(54) **REAKTIVE KIESELSÄURESUSPENSIONEN**

REACTIVE SILICIC ACID SUSPENSIONS

SUSPENSIONS D'ACIDE SILICIQUE REACTIVES

(84) Benannte Vertragsstaaten:
**BE DE FR GB**

(30) Priorität: **29.12.2004 DE 102004063762**

(43) Veröffentlichungstag der Anmeldung:
**12.09.2007 Patentblatt 2007/37**

(73) Patentinhaber: **Wacker Chemie AG
81737 München (DE)**

(72) Erfinder:
• **BARTHEL, Herbert
84547 Emmerting (DE)**
• **DREYER, Michael
84508 Burgkirchen (DE)**

(74) Vertreter: **Gössmann, Christoph Tassilo et al
Wacker-Chemie GmbH
Zentralbereich PML,
Hanns-Seidel-Platz 4
81737 München (DE)**

(56) Entgegenhaltungen:
EP-A- 0 381 376        EP-A- 0 924 342
DE-A1- 2 626 942       DE-A1- 2 641 699

• DATABASE WPI Section Ch, Week 199113 Derwent Publications Ltd., London, GB; Class E36, AN 1991-092586 XP002377804 & RO 99 500 A (INST POLITEH IASI) 30. August 1990 (1990-08-30)

**Beschreibung**

Die Erfindung betrifft Suspensionen, Formkörper und Schichten.

Bekannt sind Partikel-, Metalloxid- und Kieselsäuresuspensionen in Wasser, die durch Zusatz von Alkalität oder anionischen Polyelektrolyten anionisch elektrostatisch stabilisiert sind. Eine andere bekannte Form ist die kationische Stabilisierung, durch Zusatz von Säure oder kationischen Polyelektrolyten.

Werden Partikel- oder Kieselsäuresuspensionen als Formkörper oder als Beschichtung getrocknet, so entstehen keine mechanisch stabilen Strukturen; die entstehenden Partikel- oder Kieselsäurekuchen oder -körper zerbröseln oder zerfallen unter mechanischer Belastung.

Aufgabe der Erfindung ist es den Stand der Technik zu verbessern und insbesondere Formkörper oder Beschichtungen aus Partikel- oder Kieselsäuresuspensionen durch Trocknen herzustellen, unter Erhalt mechanisch stabiler Strukturen; das heißt, dass die entstehenden Partikel- oder Kieselsäurekuchen oder -körper unter mechanischer Belastung nicht zerbröseln oder zerfallen.

Die Aufgabe wird durch die Erfindung gelöst.

Gegenstand der Erfindung sind Poröser Formkörper oder poröse Beschichtung, wobei sie zumindest auf einer Suspension aufbauen, enthaltend:

- feinteilige pyrogene Kieselsäurepartikel in Mengen von 0,01 - 50 Gew.%, wobei die Partikel eine fraktale Dimension der Masse $D_m$ von kleiner oder gleich als 2,8 aufweisen
- Flüssigkeit
- Kolloid-skaliger Klebstoff.

Bevorzugte erfindungsgemäße Suspensionen sind:

a)
Erfindungsgemäße Suspensionen A enthaltend

- feinteilige pyrogene Kieselsäurepartikel, wobei die Partikel eine fraktale Dimension der Masse $D_m$ von kleiner oder gleich als 2,8 aufweisen, 0,01 - 50 Gew.%, bevorzugt 1-30 Gew.%, besonders bevorzugt 2-15 Gew.%, bezogen auf die Suspension
- Flüssigkeit
- Reaktives Monomer in Mengen von vorzugsweise 0,1 - 100 Gewichts-Teile, bevorzugt 1-20 Gewichts-Teile, besonders bevorzugt 2-10 Gewichts-Teile, bezogen auf 100 Gewichts-Teile Partikel

b)
Erfindungsgemäße Suspensionen B enthaltend

- feinteilige pyrogene Kieselsäurepartikel, wobei die Partikel eine fraktale Dimension der Masse $D_m$ von kleiner oder gleich als 2,8 aufweisen, 0,01 - 50 Gew.%, bevorzugt 1-30 Gew.%, besonders bevorzugt 2-15 Gew.%, bezogen auf die Suspension
- Flüssigkeit
- Reaktives Oligomer oder Polymer in Mengen von vorzugsweise 0,1-100 Gewichts-Teile, bevorzugt 1-20 Gewichts-Teile, besonders bevorzugt 2-10 Gewichts-Teile, bezogen auf 100 - Gewichts-Teile Partikel

c)
Erfindungsgemäße Suspensionen C enthaltend

- feinteilige pyrogene Kieselsäurepartikel, wobei die Partikel eine fraktale Dimension der Masse $D_m$ von kleiner oder gleich als 2,8 aufweisen, 0,01 - 50 Gew.%, bevorzugt 1-30 Gew.%, besonders bevorzugt 2-15 Gew%, bezogen auf die Suspension
- Flüssigkeit
- Vernetzungssystem in Mengen von vorzugsweise 0,1 - 100 Gewichts-Teile, bevorzugt 1-20 Gewichts-Teile, besonders bevorzugt 2-10 Gewichts-Teile, bezogen auf 100 Gewichts-Teile Partikel.

d)
Erfindungsgemäße Suspensionen D enthaltend

- feinteilige pyrogene Kieselsäurepartikel, wobei die Partikel eine fraktale Dimension der Masse $D_m$ von kleiner

oder gleich als 2,8 aufweisen, 0,01 - 50 Gew.%, bevorzugt 1-30 Gew.%, besonders bevorzugt 2-15 Gew.%, bezogen auf die Suspension
- Flüssigkeit
- Filmbildende Polymere in Mengen von vorzugsweise 0,1 - 100 Gewichts-Teile, bevorzugt 1-20 Gewichts-Teile, besonders bevorzugt 2-10 Gewichts-Teile, bezogen auf 100 Gewichts-Teile Partikel

e)
Erfindungsgemäße Suspensionen E enthaltend

- feinteilige pyrogene Kieselsäurepartikel, wobei die Partikel eine fraktale Dimension der Masse $D_m$ von kleiner oder gleich als 2,8 aufweisen, 0,01 - 50 Gew.%, bevorzugt 1-30 Gew.%, besonders bevorzugt 2-15 Gew.%, bezogen auf die Suspension mit reaktiven Oberflächengruppen
- Flüssigkeit

Beliebige Kombinationen aus A, B, C, D und E sind möglich.

Flüssigkeiten:

Erfindungsgemäße Flüssigkeiten sind solche mit einer Viskosität in reiner Form von kleiner als 100 mPas bei 25˚C, bevorzugt kleiner 10 mPas, besonders bevorzugt kleiner 2 mPas.

Beispiele sind Wasser, protische Lösemittel wie ROH, wie MeOH, EtOH, IsoPrOH, und nicht-protische polare Lösemittel, wie Ketone wie Aceton, Methylethylketon, Methylisobutylketon, Ether wie Tetrahydrofuran, Dioxane, Amide wie Dimethylformamid, und unpolare Lösemittel, wie Alkane, wie cyclo-Hexan, Decane, Benzine, wie Leichtbenzin, Reinigungsbenzin, oder nieder- und höher siedende Kohlenwasserstoffe, wie aromatische Kohlenwasserstoffe, wie Benzol, Toluol, Xylol.

Besonders bevorzugte Beispiele sind protische und polare organische Lösemittel, davon bevorzugt sind Methanol, Ethanol, Isopropanol, Tetrahydrofuran, Dioxan, Aceton, Methylethylketon, Methylisobutylketon.

In einer anderen bevorzugten Form ist Wasser vorteilhaft.

Pyrogene Kieselsäurepartikel mit mittlerem Durchmesser von kleiner 100 $\mu$m. Bevorzugt weisen die erfindungsgemäß eingesetzten Partikel einen mittleren Durchmesser größer 1 nm, vorzugsweise von 1 nm bis 100 $\mu$m, besonders bevorzugt von 10 nm bis 10 $\mu$m, insbesondere von 50 nm bis 1000 nm, speziell ausgewählt von 50 nm bis 250 nm, auf.

Bei den erfindungsgemäßen pyrogenen Kieselsäurepartikel handelt es sich um bei Raumtemperatur und dem Druck der umgebenden Atmosphäre, also zwischen 900 und 1100 hPa, feste Partikel.

Die pyrogenen Kieselsäurepartikel sind bevorzugt unlöslich oder schwerlöslich in Wasser oder in anderen Lösemitteln, die zur Herstellung der erfindungsgemäßen Suspension eingesetzt werden können.

Die pyrogenen Kieselsäurepartikel weisen bevorzugt eine Löslichkeit in Wasser bei pH 7,33 und einem Elektrolythintergrund von 0,11 Mol/l und einer Temperatur von 37˚C von kleiner 0,1 g/l, besonders bevorzugt von kleiner als 0,05 g/l, auf, bei dem Druck der umgebenden Atmosphäre, also zwischen 900 und 1100 hPa.

Bevorzugt weisen die erfindungsgemäß eingesetzten pyrogenen Kieselsäurepartikel eine Molmasse größer 10.000 g/Mol, besonders bevorzugt eine Molmasse von 50.000 bis 100.000.000 g/Mol, insbesondere von 100.000 bis 10.000.000 g/Mol, auf, jeweils gemessen bevorzugt mittels statischer Lichtstreuung.

Bevorzugt weisen die erfindungsgemäß eingesetzten pyrogenen Kieselsäurepartikel einen Kohlenstoffgehalt von kleiner als 50 Gewichtsprozente auf.

Die pyrogenen Kieselsäurepartikel haben bevorzugt eine Mohs'sche Härte gleich oder größer 1. Besonders bevorzugt weisen die erfindungsgemäß eingesetzten Partikel eine Mohs Härte größer als 4 auf.

Bevorzugt sind Kieselsäuren mit spezifischen Oberflächen nach BET von größer als 10 $m^2$/g, besonders bevorzugt synthetische Kieselsäuren, wie in Flammenprozessen hergestellte pyrogene Kieselsäuren, wie in Plasmaverfahren hergestellte Siliciumdioxide, wie in Heißwandreaktoren hergestellte Siliciumdioxide, wie in Laserverfahren hergestellte Siliciumdioxide, besonders bevorzugt pyrogene Kieselsäure hergestellt bei bevorzugten Temperaturen von über 1000 ˚C.

Partikel der Suspension können auch aus beliebigen Mischungen der oben angegebenen Partikel ausgewählt werden.

Die pyrogenen Kieselsäurepartikel haben vorzugsweise eine mittlere Primärteilchen-Partikelgröße d-PP von 0,5 bis 1000 nm, bevorzugt 5 bis 100 nm, besonders bevorzugt 5 bis 50 nm. Geeignete Messverfahren hierzu sind zum Beispiel die Bestimmung der BET-Oberflächen und der Material-Dichte: d-PP = 6 / (BET * Material-Dichte) oder zum Beispiel die Transmissions-Elektronenmikroskopie oder Hochauflösende Rasterelektronenmikroskopie, z.B. im Feldemissionsmodus, oder zum Beispiel die Ultraschallspektroskopie im Mess-Bereich 1 bis 100 MHz.

Die pyrogenen Kieselsäurepartikel haben vorzugsweise eine mittlere Sekundärstruktur- oder Aggregates-Partikelgröße d-Aggr von 50 bis 5000 nm, bevorzugt 100 bis 500 nm, gemessen als hydrodynamischen Durchmesser.

Geeignete Messverfahren hierzu sind zum Beispiel die dynamische Lichtstreuung oder Photokorrelationsspektroskopie, zur Messung von Konzentrationen >0,01 Gew.% Feststoff, wobei diese Messung als Rückstreuung ausgeführt bzw. mittels Kreuzkorrelation gegen Mehrfachstreuung korrigiert werden kann.

Die pyrogenen Kieselsäurepartikel haben vorzugsweise eine mittlere Tertiär- oder Agglomerats-Partikelgröße d-Aggl von >100 nm, gemessen als geometrischer Durchmesser. Geeignete Messverfahren hierzu sind zum Beispiel die Laser-Lichtbeugung.

Vorzugsweise weisen die pyrogenen Kieselsäurepartikel eine spezifische Oberfläche von 1 bis 1000 $m^2/g$, bevorzugt 10 bis 500 $m^2/g$, ganz besonders bevorzugt von 100 bis 300 $m^2/g$. Die BET-Oberfläche wird nach bekannten Verfahren gemessen, bevorzugt gemäß Deutscher Industrie Norm DIN 66131 und DIN 66132.

vorzugsweise weisen die pyrogenen Kieselsäurepartikel eine fraktale Dimension der Oberfläche $D_s$ von vorzugsweise kleiner oder gleich 2, 3 auf, bevorzugt von kleiner oder gleich 2,1, besonders bevorzugt von 1,95 bis 2,05, wobei die fraktale Dimension der Oberfläche $D_s$ hierbei definiert ist als: Partikel-Oberfläche ist proportional zum Partikel-Radius R hoch $D_s$.

Erfindungsgemäß weisen die pyrogenen Kieselsäurepartikel eine fraktale Dimension der Masse $D_m$ von kleiner oder gleich als 2,8, bevorzugt gleich oder kleiner 2,5, besonders bevorzugt von 1,9 bis 2,2 auf. Die fraktale Dimension der Masse $D_m$ ist hierbei definiert als: Partikel-Masse ist proportional zum Partikel-Radius R hoch $D_m$.

Es können auch hydrophile Kieselsäuren eingesetzt werden, die frisch hergestellt sind und z.B. direkt aus der Flamme kommen, solche die zwischengelagert oder bereits handelsüblich verpackt sind. Es können auch hydrophobierte oder silylierte Kieselsäuren, z.B. handelsübliche, eingesetzt werden.

Es können unverdichtete, mit Klopfdichten kleiner 60 g/l, aber auch verdichtete, mit Klopfdichten größer 60 g/l, Kieselsäuren eingesetzt werden. Die Klopfdichte kann nach DIN EN ISO 787-11 bestimmt werden.

Es können Gemische aus verschiedenen Kieselsäuren eingesetzt werden, so z.B. Mischungen aus Kieselsäuren unterschiedlicher BET-Oberfläche, oder Mischungen aus Kieselsäuren mit unterschiedlichem Hydrophobier- oder Silyliergrad.

In einer bevorzugten Ausführung sind die pyrogenen Kieselsäurepartikel hydrophobe Partikel, besonders bevorzugt Oberflächen-modifizierte Metalloxide, wobei die Oberflächenmodifizierten Metalloxide bevorzugt silylierte, mit Organosiliciumverbindungen modifizierte Metalloxide, ganz besonders bevorzugt silylierte pyrogene Kieselsäure, sind.

Bevorzugt können zur Silylierung von Partikeln Organosiliciumverbindungen, wie z.B.

(i) Organosilane bzw. Organosilazane der Formel

$$R^1{}_dSiY_{4-d} \qquad (I)$$

und/oder deren Teilhydrolysate,
wobei
$R^1$ gleich oder verschieden sein kann und einen einwertigen, gegebenenfalls substituierten Kohlenwasserstoffrest mit 1 bis 24 Kohlenstoff-Atomen, der durch Sauerstoffatome unterbrochen sein kann, bedeutet,
d gleich 1, 2 oder 3 bedeutet und
Y gleich oder verschieden sein kann und Halogenatom, einwertige Si-N-gebundene Stickstoffreste, an den ein weiterer Silylrest gebunden sein kann, $-OR^2$ oder $-OC(O)OR^2$ bedeutet, wobei $R^2$ gleich Wasserstoffatom oder ein einwertiger, gegebenenfalls substituierter Kohlenwasserstoffrest mit 1-8 Kohlenstoffatomen, der durch Sauerstoffatome unterbrochen sein kann, bedeutet, oder

(ii) lineare, verzweigte oder cyclische Organosiloxane aus Einheiten der Formel

$$R^3{}_e(OR^4)_fSiO_{(4-e-f)/2} \qquad (II),$$

wobei
$R^3$ gleich oder verschieden sein kann und eine der oben für $R^1$ angegebenen Bedeutungen hat,
$R^4$ gleich oder verschieden sein kann und eine für $R^2$ angegebene Bedeutung hat,
e 0, 1, 2 oder 3 ist und
f 0, 1, 2, 3 ist, mit der Maßgabe dass die Summe $e+f \leq 3$ ist, oder
Gemische aus (i) und (ii)
eingesetzt werden.

Bei den Organosiliciumverbindungen, die zur Silylierung der Feststoffpartikel eingesetzt werden können, kann es sich beispielsweise um Gemische aus Silanen oder Silazanen der Formel (I) handeln, wobei solche aus Methyl-Chlorsilanen einerseits oder Alkoxysilanen und gegebenenfalls Disilazanen andererseits bevorzugt sind.

Beispiele für $R^1$ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; Aralkylreste, wie der Benzylrest, der alpha - und der beta -Phenylethylrest.

Beispiele für substituierte Kohlenwasserstoffreste R sind halogenierte Reste wie der 3-Chlorpropylrest, der 3,3,3-Trifluorpropylrest, Chlorphenylreste, Hexafluorpropylreste, wie der 1-Trifluormethyl-2,2,2-trifluorethylrest; der 2-(Perfluorhexyl)ethylrest, der 1,1,2,2-Tetrafluorethyloxypropylrest, der 1-Trifluormethyl-2,2,2-trifluorethyloxypropylrest, der Perfluorisopropyloxyethylrest, der Perfluorisopropyloxypropylrest.

Bevorzugt ist der Methyl-, Octyl- und Vinylrest, besonders bevorzugt der Methylrest.

Bei $R^2$ handelt es sich bevorzugt um den Methyl- und Ethylrest.

Beispiele für Organosilane der Formel (I) sind Alkylchlorsilane, wie Methyltrichlorsilan, Dimethyldichlorsilan, Trimethylchlorsilan, Octylmethyldichlorsilan, Octyltrichlorsilan, Octadecylmethyldichlorsilan und Octadecyltrichlorsilan, Methylmethoxysilane, wie Methyltrimethoxysilan, Dimethyldimethoxysilan und Trimethylmethoxysilan, Methylethoxysilane, wie Methyltriethoxysilan, Dimethyldiethoxysilan und Trimethylethoxysilan, Methylacetoxysilane, wie Methyltriacethoxysilan, Dimethyldiacethoxysilan und Trimethylacethoxysilan, Vinylsilane, wie Vinyltrichlorsilan, Vinlymethyldichlorsilan, Vinyldimethylchlorsilan, Vinyltrimethoxysilan, Vinlymethyldimethoxysilan, Vinyldimethylmethoxysilan, Vinyltriethoxysilan, Vinylmethyldiethoxysilan und Vinyldimethylethoxysilan, Disilazane wie Hexamethyldisilazan, Divinyltetramethyldisilazan und Bis(3,3-trifluorpropyl)tetramethyldisilazan, Cyclosilazane wie Octamethylcyclotetrasilazan, und Silanole wie Trimethylsilanol.

Bevorzugt ist Methyltrichlorsilan, Dimethyldichlorsilan und Trimethylchlorsilan oder Hexamethyldisilazan.

Beispiele für Organosiloxane der Formel (II) sind lineare oder cyclische Dialkylsiloxane mit einer mittleren Anzahl an Dialkylsiloxyeinheiten von größer als 3. Die Dialkylsiloxane sind bevorzugt Dimethylsiloxane. Besonders bevorzugt sind lineare Polydimethylsiloxane mit folgenden Endgruppen: Trimethylsiloxy-, Dimethylhydroxysiloxy-, Dimethylchlorsiloxy-, Methyldichlorsiloxy-, Dimethylmethoxysiloxy-, Methyldimethoxysiloxy-, Dimethylethoxysiloxy-, Methyldiethoxysiloxy-, Dimethylacethoxysiloxy-, Methyldiacethoxysiloxy- und Dimethylhydroxysiloxygruppen, insbesondere mit Trimethylsiloxy- oder Dimethylhydroxysiloxyendgruppen.

Bevorzugt haben die genannten Polydimethylsiloxane eine Viskosität bei 25˚C von 2 bis 100 mPas.

Weitere Beispiele für Organosiloxane sind Siliconharze, im besonderen solche, die als Alkylgruppe Methylgruppen enthalten, wobei es sich besonders bevorzugt um solche handelt, die $R^1_3SiO_{1/2}$ und $SiO_{4/2}$-Einheiten enthalten oder solche, die $R^1SiO_{3/2}$ und gegebenenfalls $R^1_2SiO_{2/2}$-Einheiten enthalten, wobei $R^1$ eine der oben genannten Bedeutungen hat.

Bevorzugt haben die genannten Siliconharze eine Viskosität bei 25˚C von 500 bis 5000 $mm^2/s$.

Bei Siliconharzen mit einer Viskosität von größer als 1000 $mm^2/s$ bei 25˚C sind solche bevorzugt, die sich in einem technisch gut handhabbaren Lösungsmittel, wie vorzugsweise Alkohole wie Methanol, Ethanol, iso-Propanol, Ether wie Diethylether, Tetrahydrofuran, Siloxane wie Hexamethyldisiloxan, Alkane wie Cyclohexan oder n-Octan, Aromaten wie Toluol oder Xylol, mit einer Konzentration über 10 Gew.-% und einer Mischungsviskosität kleiner als 1000 $mm^2/s$ bei einer Temperatur von 25˚C und dem Druck der umgebenden Atmosphäre lösen lassen.

Unter den festen Organosiloxanen sind solche bevorzugt, die sich in einem technisch handhabbaren Lösungsmittel (wie oben definiert) mit einer Konzentration größer als 10 Gew.% und einer Mischungsviskosität kleiner als 1000 $mm^2/s$ bei einer Temperatur von 25˚C lösen.

Bei den, zur Herstellung der erfindungsgemäß eingesetzten silylierten pyrogenen Kieselsäuren, verwendeten Stoffe kann es sich jeweils um eine einzelne Art wie auch um ein Gemisch aus mindestens zwei Arten derartiger Stoffe handeln.

Ein bevorzugtes Verfahren zur Herstellung der erfindungsgemäß eingesetzten silylierten Kieselsäuren soll im Folgenden anhand des bevorzugten Ausgangsprodukts pyrogene Kieselsäure beschrieben werden.

Die Hydrophobierung und Silylierung, die zur Herstellung der erfindungsgemäß eingesetzten Kieselsäuren bevorzugt durchgeführt wird, kann als diskontinuierliche Reaktion, d.h. im Batch-Verfahen, oder als kontinuierliche Reaktion durchgeführt werden, wobei die kontinuierliche Reaktion bevorzugt ist.

Die Hydrophobierung und Silylierung kann in einem Schritt realisiert werden oder in 2 oder 3 aufeinanderfolgenden Schritten. Das heißt, der Reaktion kann eine Beladung (Physisorption des Silyliermittels) vorgeschaltet sowie der Reaktion vorzugsweise ein Reinigungsschritt nachgeschaltet sein. Bevorzugt sind 3 suksessive Schritte: (1) Beladung - (2) Reaktion - (3) Reinigung.

Die Beladungstemperatur liegt bei vorzugsweise -30 bis 350˚C, bevorzugt 20 bis 120˚C. Die Reaktionstemperaturen reichen vorzugsweise von 50 bis 400˚C, besonders bevorzugt von 50 bis 330˚C. Die Reaktionszeiten dauern vorzugsweise von 1 Minute bis 24 Stunden, bevorzugt 30 Minuten bis 4 Stunden. Der Reaktionsdruck liegt vorzugsweise im Bereich Normaldruck, d.h. zwischen 900 und 1100 hPa. Die Reinigungstemperatur reicht vorzugsweise von 100 bis 400˚C.

Eine effektive Bewegung und Durchmischung von Kieselsäure und Silyliermittel während Schritte (1) Beladung, (2) Reaktion und Reinigung (3) ist notwendig. Dies erfolgt bevorzugt durch mechanische oder gasgetragene Fluidisierung. Eine gasgetragene Fluidisierung kann durch alle inerten Gase erfolgen, die nicht zu Nebenreaktionen, Abbaureaktionen, Oxidationsvorgängen und Flammen- und Explosionserscheinungen führen. Die Leerrohrgasgeschwindigkeit liegt hierbei bei 0,05 bis 5 cm/s, besonders bevorzugt bei 0,05 bis 1 cm/s. Mechanische Fluidisierung kann durch Flügelrührer, Ankerrührer und sonstige geeignete Rührorgane erfolgen.

In einer besonders bevorzugten Ausführung wird nur die Gasmenge zugeführt, die zur Aufrechterhaltung einer sauerstoffarmen Atmosphäre ausreicht, bevorzugt weniger als 5 Vol.-%, die Fluidisierung erfolgt dann rein mechanisch.

Die Reaktion wird bevorzugt in einer Atmosphäre durchgeführt, die nicht zur Oxidation der silylierten Kieselsäure führt, d.h. bevorzugt weniger als 10 Vol.-% Sauerstoff, besonders bevorzugt sind weniger als 2,5 Vol.-%, wobei beste Ergebnisse bei weniger als 1 Vol.-% Sauerstoff erzielt werden.

Es erfolgt ein effektives Einbringen der Silyliermittel in die Kieselsäure. Handelt es sich bei den Silyliermitteln bei Applikationstemperatur um flüssige Verbindungen, werden bevorzugt effektive Verdüsungstechniken eingesetzt. Verdüsen in 1-Stoffdüsen unter Druck (5 bis 20 bar), Versprühen in 2-Stoffdüsen unter Druck (Gas und Flüssigkeit 2 bis 20 bar), Feinstverteilen mit Atomizern, etc.

Bevorzugt wird das Silyliermittel als feinstverteiltes Aerosol zugefügt, wobei das Aerosol eine Sinkgeschwindigkeit von vorzugsweise 0,1 bis 20 cm/s und eine Tropfengröße mit einem aerodynamischen Äquivalentdurchmesser von 5 bis 25 $\mu$m aufweist.

Wahlweise können vorzugsweise protische Lösemittel hinzugefügt werden, wie flüssige oder verdampfbare Alkohole oder Wasser; typische Alkohole sind iso-Propanol, Ethanol und Methanol. Es können auch Gemische der oben genannten protischen Lösemittel zugefügt werden.

Wahlweise können vorzugsweise saure oder basische Katalysatoren zugesetzt werden. Diese Katalysatoren können basischen Charakters sein, im Sinne einer Lewis Base oder einer Brönsted Base, wie Ammoniak, oder sauren Charakters sein, im Sinne einer Lewis Säure oder einer Brönsted Säure, wie Chlorwasserstoff. Falls Katalysatoren eingesetzt werden, handelt es sich bevorzugt um Spuren, d.h weniger als 1000 ppm. Besonders bevorzugt werden keine Katalysatoren zugesetzt.

Der Reinigungsschritt ist durch eine Bewegung gekennzeichnet, wobei eine langsame Bewegung und ein geringes Durchmischen bevorzugt sind. Der Reinigungsschritt ist weiterhin durch einen erhöhten Gaseintrag gekennzeichnet, entsprechend einer Leerrohrgasgeschwindigkeit von 0,001 bis 10 cm/s. Zusätzlich kann der Reinigungsschritt ein Mischen mit mechanischen Rührorganen beinhalten. Die Rührorgane werden dabei so eingestellt und bewegt, dass bevorzugt Mischen und Fluidisieren, jedoch nicht völlige Verwirbelung eintritt.

Zusätzlich können während des Silylierschrittes Verfahren zur mechanischen Verdichtung eingesetzt werden, wie zum Beispiel Presswalzen, Kugelmühlen, Kollergänge, Schraubenverdichter und Brikettierer.

Zusätzlich können vor, während oder nach des Silylierungsschrittes Verfahren zur Desagglomerierung der Kieselsäure eingesetzt werden, wie Stiftmühlen oder Vorrichtungen zur Mahlsichtung und/oder Verfahren zur mechanischen Verdichtung der Kieselsäure, wie zum Beispiel Presswalzen, oder Verdichten durch Absaugen des Luft- oder Gasinhaltes durch geeignete Vakuummethoden oder andere Verfahren zur mechanischen Verdichtung wie zum Beispiel Presswalzen, Kugelmühlen, Kollergänge, Schraubenverdichter und Brikettierer.

Besonders bevorzugt sind hydrophobe und hochhydrophobe und hochunpolare pyrogene Kieselsäurepartikel, wobei solche bevorzugt eine Dichte an Oberflächen-Silanolgruppen SiOH von kleiner als 1 SiOH / nm$^2$, vorzugsweise kleiner 0,5 SiOH / nm$^2$, bevorzugt von kleiner als 0,25 SiOH / nm$^2$ aufweisen.

Bevorzugt sind die pyrogene Kieselsäurepartikel dadurch gekennzeichnet, dass sie von reinem Wasser und Wasser in dem Salze, wie Natriumchlorid, gelöst sind, nicht vollständig benetzt werden, also einen Kontaktwinkel $\theta$ in Luft gegen Wasser von größer 0˚ aufweisen.

Bevorzugt liegt der Kontaktwinkel $\theta$ der pyrogenen Kieselsäurepartikel gegen Wasser zwischen 60˚ und 180˚, bevorzugt größer 90˚.

Die pyrogenen Kieselsäurepartikel sind feinteilige Feststoffe, die vorzugsweise nicht völlig oder nur unvollständig Wasserbenetzbar sind, das heißt solche, die keine oder keine vollständige Wasserbenetzung aufweisen, also solche die eine Oberflächenenergie $\gamma$ von kleiner als 72,5 mJ/m$^2$ aufweisen und gegen Wasser in Luft einen Kontaktwinkel $\theta$ größer 0˚ aufweisen.

Bevorzugt sind pyrogene Kieselsäurepartikel mit einer fraktalen Dimension (Dm) der Masse von Dm < 2,5, ganz besonders Dm < 2,2, hervorgehoben Dm < 2,1.

Bevorzugt sind pyrogene Kieselsäurepartikel mit Klopfdichten nach DIN EN ISO 787-11 von Klopfdichten < 500, besonders < 250 g/l, im Besonderen < 120 g/l, ganz besonders < 60 g/l.

Bevorzugt sind pyrogene Kieselsäurepartikel, die aus Agglomeraten von Größe 0,5 bis 100 $\mu$m bestehen, die

wiederum aus Aggregaten bestehen mit einer Größe von 50 bis 500 nm, und hydrodynamischen Durchmessern in Wasser von 100 bis 250 nm.

Bevorzugt sind pyrogene Kieselsäurepartikel die Haufwerke bilden von einer Porosität >0,5, besonders > 0,8, im Besonderen >0,9, insbesondere >0,95. Die Porosität ε eines Haufwerks, Formkörpers oder einer Beschichtung ist definiert als

$$\varepsilon = 1 - Volumen_{Material}/Volumen_{Körper}$$

mit $Volumen_{Material}$ = Volumen der Partikel und des kolloidskaligen Klebstoffs und $Volumen_{Körper}$ = Volumen des Haufwerks, Formkörper oder der Beschichtung. Die Porosität ε kann durch Quecksilberporosimetrie oder mit inerten Gasen wie Helium oder Argon bestimmt werden, durch Messen des Leervolumens $Volumen_{leer}$ des Haufwerks, Formkörper oder der Beschichtung, mit ε = $Volumen_{leer}/Volumen_{Körper}$

Kolloid-skaliger Klebstoff,

verklebt und oder verbindet die pyrogenen Kieselsäurepartikel auf kolloidaler und Kolloid-skaliger Ebene, und wird vorzugsweise von 0,1 - 100 Gewichts-Teile, bevorzugt 1-20 Gewichts-Teile, besonders bevorzugt 2-10 Gewichts-Teile, bezogen auf 100 Gewichts-Teile Partikel zugefügt.

Der Kolloid-skalige Klebstoff kann gleich oder verschieden wie die Partikel sein.

Bevorzugt ist das Material des kolloid-skaligen Klebstoffes von dem Material der Partikel in der stofflichen Zusammensetzung unterschiedlich. Bevorzugt >5 Gew.%, besonders bevorzugt >50 Gew.%.

Bevorzugt wird mit dem Material des kolloid-skaligen Klebstoffes zwischen den Partikeln eine fließfähige und oder elastische Verbindung geschaffen.

Bevorzugte Ausführungen für kolloid-skaligen Klebstoff.

a) reaktives Monomer:

Vernetzbare und/oder polymerisierbare Monomere, wie kationisch, anionisch, radikalisch oder photolytisch polymerisierbare Monomere, kondensierbare Monomere, addierbare Monomere, wie Glycidylether in Mischung mit Aminen, Mercaptanen oder Carbonsäuren, wie Alkyl-Acrylsäuren, und -ester, wie Methacrylsäuremethylester, wie Isocyanate und Wasser oder Di-, Tri- und Polyole, wie Alkoxysilane und deren Mischungen, mit pro Molekül mehr als einer Alkoxygruppe pro Si-Atom, oder bei Mischungen mit im Mittel mehr als 1,5 Alkoxygruppen pro Si, Metallalkoholate, wie Titanate, wie Titan-Tetrabutylat, Zirkonate, wie Zirkon-Tetraethylat, olefinische Monomere wie Monostyrol, bevorzugt Alkoxysilane und deren Mischungen, mit pro Molekül mehr als einer Alkoxygruppe pro Si-Atom, oder bei Mischungen mit im Mittel mehr als 1,5 Alkoxygruppen pro Si, besonders bevorzugt Alkoxysilane und deren Mischungen die pro Si-Atom eine oder mehrere Methylgruppen tragen.

b) Reaktives Oligomer oder Polymer:

Alle Polymere, Präpolymere, reaktive Vorstufen, Polymere die als Bindemittel, zum Beispiel für Farben und Lacke, eingesetzt werden können und die mit sich selbst oder den Partikeln reagieren oder vernetzen können.

Bevorzugte Beispiele sind Polymere oder Oligomere, die mit sich oder den Partikeln Zwitterionen oder Ionenpaare oder ionische Bindungen eingehend können.

Erfindungsgemäße bevorzugte Beispiele hierfür sind für den Fall dass auf den Partikel stark oder schwach saure Gruppen vorhanden sind, zum Beispiel Gruppen wie -COOH oder saure -OH, wie M-OH, wie B-OH, P-OH, Al-OH, Si-OH, Ge-OH, Zr-OH Gruppen, dann bevorzugt Polymere mit basischen Gruppen, wie Polymere, die Aminogruppen tragen, wie primäre, sekundäre oder tertiäre Amine, z.B. Aminosiloxane, wie lineare und verzweigte Aminosiloxane, wie flüssige und feste Aminosiloxane, wie Aminosiloxanpolymere oder -harze, zum Beispiel

Polydimethylsiloxane mit endständigen oder in der Kette an einem Si-Atom gebundenen 3-Amino-Propyl- oder 1-Amino-MethylGruppen, mit einer Viskosität bei 25°C von 500-5000 mPas und einer Aminzahl von 0,5 bis 10.

Bevorzugt ist die Kombination pyrogene Kieselsäurepartikel mit SiOH-Gruppen und Kolloid-skaliger Klebstoff Aminopolysiloxan, besonders bevorzugt pyrogene Kieselsäure und als Kolloid-skaliger Klebstoff Aminopolysiloxane, wie 3-Aminopropylmethylsiloxy-Gruppen-haltige Polydimethylsiloxane.

Beispiele sind Organosiloxane sind lineare oder cyclische Dialkylsiloxane mit einer mittleren Anzahl an Dialkylsiloxyeinheiten von größer als 3. Die Dialkylsiloxane sind bevorzugt Dimethylsiloxane. Besonders bevorzugt sind lineare Polydimethylsiloxane mit folgenden Endgruppen: Trimethylsiloxy-, Dimethylhydroxysiloxy-, Dimethylchlorsiloxy-, Methyldichlorsiloxy-, Dimethylmethoxysiloxy-, Methyldimethoxysiloxy-, Dimethylethoxysiloxy-, Methyldiethoxysiloxy-, Dimethylacethoxysiloxy-, Methyldiacethoxysiloxy- und Dimethylhydroxysiloxygruppen, insbesondere mit Trimethylsiloxy- oder Dimethylhydroxysiloxyendgruppen.

Bevorzugt haben die genannten Polydimethylsiloxane eine Viskosität bei 25°C von 20 bis 1000000 mPas, besonders bevorzugt von 500 bis 5000 mPas.

Weitere Beispiele für Organosiloxane sind Siliconharze, im besonderen solche, die als Alkylgruppe Methylgruppen enthalten, wobei es sich besonders bevorzugt um solche handelt, die $R_3SiO_{1/2}$ und $SiO_{4/2}$-Einheiten enthalten oder solche, die $RSiO_{3/2}$ und gegebenenfalls $R_2SiO_{2/2}$-Einheiten enthalten, wobei R eine der oben genannten Bedeutungen von R1 hat.

Bevorzugt haben die genannten Siliconharze eine Viskosität bei 25°C von 500 bis 5000 $mm^2$/s.

Bei Siliconharzen mit einer Viskosität von größer als 1000 $mm^2$/s bei 25°C sind solche bevorzugt, die sich in einem technisch gut handhabbaren Lösungsmittel, wie vorzugsweise Alkohole wie Methanol, Ethanol, iso-Propanol, Ether wie Diethylether, Tetrahydrofuran, Siloxane wie Hexamethyldisiloxan, Alkane wie Cyclohexan oder n-Octan, Aromaten wie Toluol oder Xylol, mit einer Konzentration über 10 Gew.-% und einer Mischungsviskosität kleiner als 1000 $mm^2$/s bei einer Temperatur von 25°C und dem Druck der umgebenden Atmosphäre lösen lassen.

Unter den festen Organosiloxanen sind solche bevorzugt, die sich in einem technisch handhabbaren Lösungsmittel (wie oben definiert) mit einer Konzentration größer als 10 Gew.% und einer Mischungsviskosität kleiner als 1000 $mm^2$/s bei einer Temperatur von 25°C lösen.

Bei den Organosiloxanen kann es sich jeweils um eine einzelne Art wie auch um ein Gemisch aus mindestens zwei Arten derartiger Stoffe handeln.

Weitere bevorzugte Beispiele sind Silan-terminierte oder Silanfunktionelle Polymere, wie Polymere, die mono-, di- und trialkoxysilan-Reste, endständig, oder in der Kette gebunden, enthalten, Beispiele hierfür sind über die Reaktion von Aminoalkyl-alkoxysilan und Mono-, Di- und/oder Polyisocyanaten hergestellte silanterminierte Polymere, oder durch Copolymerisation von Methacryloxyalkylsilanen und Acrylate oder Alkylacrylaten, auch unter Mischcopolymerisation mit anderen Olefinen, wie Styrole, wie Monostyrol, hergestellen Alkoxysilan-funtionellen Polyolen, oder durch Reaktion von Alkoxysilanen mit Polyolen, wie Polyacrylat-Polyole, Polyesterpolyole oder Polyetherpolyole, wie sie zur Herstellung von Polyurethanen eingesetzt werden. Die Silanterminierung von Polyacrylat-Polyolen kann durch Copolymerisation mit Methacryloxy-funktionellen Alkoxysilanen, wie 3-Methacryloxypropyltrimethoxysilan oder bevorzugt mit 1-Methacryloxymethyltrimethoxysilan erfolgen.

Die Silanterminierung von Polyisocyanaten kann durch Reaktion mit Amino-funktionellen Alkoxysilanen, wie 3-Aminopropyltrimethoxysilan oder bevorzugt mit 1-Piperazinomethyltrimethoxysilan erfolgen.

c) Vernetzungssysteme

Harz- und Härtersysteme, wie sie zur Herstellung von Harzen und Elastomeren eingesetzt werden, wie für Epoxidharze und - elastomere, Polyurethanharze und -elastomere, Siliconharze und -elastomere, Acrylate, Polyoelfine, Polycarbonate, Polysulfone, Polysufide, Polyamide.

Bevorzugte erfindungsgemäße Beispiele für Vernetzungssysteme sind Siliconharze und Siliconkautschuke. Bevorzugte erfindungsgemäße Beispiele hierfür sind 1-Komponenten oder 2-Komponenten Siliconelastomere, die unter Ausschluß von Feuchtigkeit lagerstabil, aber unter Einwirkung von Wasser oder Feuchtigkeit vulkanisieren und aushärten, oder die 1-Komponenten oder 2-Komponenten Siliconelastomere, die peroxidisch, zum Beispiel erhöhter Temperatur, wie 80 bis 200 °C, zum Beispiel durch Verknüpfung von gesättigten und / oder ungesättigten Alkylgruppen, vernetzbar sind, oder durch Additionsreaktion von olefinischen C=C Doppelbindungen und Siliciumwasserstoff Gruppen Si-H, bevorzugt unter Einwirkung eines Katalysators, wie Platin-, Paladium oder Ruthenium, bei Raumtemperatur oder Temperaturen von 10 bis 150°C vernetzbar sind.

Eine Variante sind Vernetzungssysteme aus dem Bereich der Beschichtungsstoffe.

Beispiele sind Polymerisate, wie Poly(meth)acrylate, wie Polyvinylester, wie Polyvinylalkohole, wie Polyvinylacetale, wie Polyvinylchlorid, wie polyfluorierte Polyethylene, mit monomeren Ausgangskomponenten wie Methylmethacrylat, Butylacrylat, Ethylhexylacrylat, Hydroxyethylacrylat, Hydroxyethylmethacrylat, Hydroxypropylmethacrylat, Acrylsäure, Styrol.

Beispiele sind Polykondensationsharze wie Öl-freie gesättigte Polyester und Öl-modifizierte Polyesterharze. Beispiele sind fette Öle, kurz-, mittel- und langölige Alkydharze, Ölverkochungen, und deren Kombinationen, sowie modifizierte Alkydharze, wie styrolmodifizierte Alkydharze, Acrylsäureestermodifizierte Alkydharze, Siliconmodifizierte Alkydharze, Urethanmodifizierte Alkydharze, Epoxidharzmodifizierte Alkydharze

Beispiele sind oxidativ trocknende Lackbindemittel, wie kurz-. Mittel- und langölige Alkydharze, Ölverkochungen, und deren Kombinationen, und Polyester.

Chemisch oder reaktiv trocknende Lackbindemittel, wie Polyurethane, wie 1-Komponenten und 2-Komponenten-Polyurethane, wie Epoxidharzsystem, wie 2-Komponenten-Epoxidharz-Systeme, wie Epoxide, die mit Aminen, und solche die mit Isocyanaten vernetzt werden.

Beispiele sind ungesättigte Polyesterharze, die aus di-, tri- und mono- oder mehrfachfunktionellen Carbonsäuren und deren Anhydriden, wie Phthalsäuranhydrid, Isophthalsäure, Terephthalsäure, Hexahydrophthalsäureanhydrid, Tetrahydroxophthalsäuranhydrid, Hexahydroxoterephthalsäure, Adipinsäure, Maleinsäure, Fumarsäure, Azelainsäure, Sebacinsäure, Decandicarbonsäure, Dimerisierte Fettsäuren, Trimellithsäureanhydrid, Pyromellitsäureanhydrid, 1,4-Cyclohexandicarbonsäure, Dimethylolpropionsäureund und mono- oder mehrfachfunktionellen Alkoholen, wie Polyole, wie Ethylenglycol, 1,2-Propandiol, 1,5-Pentandiol, Diethylenglycol, 1,4-Butandiol, 1,6-Hexandiol, Neopentylglycol, Trimethylpentandiol, 1,4-Cyclohexandimethanol, Tricyclodecandimethanol, Trimethylolpropan, Glycerin, Pentaerythit, hydriertem Bisphenol A, Bisphenol A bis-Hydroxyethylether gebildet werden, und deren Modifikationen mit Monomeren des Typs Acrylmonomere, Alkoxysiloxane und Alkoxypolysiloxane. Beispiele sind Amino-Formaldehydharze, wie Harnstoff Formaldehydharze, Melamin-Formaldehydharze und Benzoguanaminharze, hergestellt aus Aminoverbindungen wie aromatischen Aminen, Carbonsäureamiden, Cyanamiden, Guanaminen, Guandiaminen, Harnstoffen, Sulfonaminen, Sulfurylamiden, Thioharnstoffe, Triazine (Melaminharze), Urethane und Carbonylverbindungen wie, Acetalaldehyd, Aceton, Butyralaldehyd, Formaldehyd, Glyoxal, Propionaldehyd, Trichloracetalaldehyd. Weitere Beispiele sind Phenol-Formaldehydharze.

Bevorzugte erfindungsgemäße Beispiel sind Siliconharze, bestehend aus $RSiO_{3/2}$, $R_3SiO_{1/2}$ und $SiO_{4/2}$ Einheiten, wobei R eine für $R^1$ oben angegebene Bedeutung hat, in beliebiger Mischung, bevorzugt mit Molmassen von 100 bis 20000 Gramm pro Mol, und einer Viskosität von 50 bis 50000 mPas bei einer Temperatur von 25°C oder falls es sich bei den Siliconharzen um feste Stoffe handelt, bei einer Viskosität der 0,1 bis 50Gew%igen Lösung der Siliconharze in einem interten Lösemittel wie Toluol, Tetrahydrofuran, Methylethylketon oder iso-Propanol von 50 bis 50000 mPas bei einer Temperatur von 25°C. Bevorzugte Beispiele sind Methylsiliconharze und Phenylsiliconharze und Methylphenylsiliconharze. Bevorzugt sind Siliconharze mit primären, sekundären und tertiären Aminoalkylfunktionen und mit einer Aminzahl von 0,5 bis 10 und einem Molekulargewicht von 250-20000 Mol/g.

Beispiele sind Polyadditionsharze wie Polyurethane, wie zum Beispiel 2-Komponenten Polyurethane, 1-Komponenten Polyurethan Systeme, 1-Komponenten Feuchtigkeitshärtende Polyurethane erhalten aus Prepolymere wie Polyisocyanaten, hergestellt aus Basisprodukten wie aromatische Diisocyanate, wie Toluoldiisocyanat, Methylendiphenyldiisocyanat, Xyloldiisocyanat, aliphatische Diisocyanate, wie Hexamethylendiisocyanat oder Hexyldiisocyanat, cycloaliphatische Diisocyanate, und die Isomerengemische der jeweiligen aufgeführten Diisocyanate, blockierte oder geschützte Polyisocyanaten, basierend auf typischen Blockierungsmittel wie Malonsäureester und Acetessigester, sekundären Aminen, Butanonoximen, Phenolen, Caprolactamen, Alkoholen.

Beispiele sind Epoxidharze, wie flüssige, halbfeste, feste Epoxidharze, bestehend zum Beispiel aus Bindemittel Bisphenol A und Bisphenol F -Epoxidharze sowie Phenolnovolakglycidylether, Kresol-Novolak-Glycidylether, Cycloaliphatische Glycidylverbindungen und epoxidierte Cycloolefine und Härtern auf Basis aliphatischer Amine, wie polyfunktioneller Amine auf Basis, Polyetherpolyamine, Alkylendiamine, wie Propylendiamine, oder cycloaliphatische Amine, Polyaminoamide, Mannichbasen, Epoxidaddukte, Mercaptanen, Säureanhydride.

Bevorzugte erfindungsgemäße Beispiele sind bei Raumtemperatur Feuchtigkeits-härtende 1-Komponenten Silicondichtstoff- und Klebstoffsysteme. Besonders bevorzugt sind solche, die füllstofffrei sind.

Beispiel für geeignete Polymere hierfür sind OH-endständige Polydimethylsiloxane mit einer Viskosität von 20 bis 200.000 mPas, bevorzugt 1000-100.000 mPas.

Als Vernetzer können bekannte Vernetzer, zum Beispiel Silane, und monomere und oligomere Organosiliciumverbindungen, eingesetzt werden, die in handelsüblichen 1-Komponenten Feuchtigkeits-härtenden Silicondichtstoff- und Klebstoffsystemen eingesetzt werden, wie zum Beispiel Tri- und Tetra-Alkoxysilane, wie Tri- und Tetra-methoxy und ethoxysilane, Tri- und Tetra-Acetoxysilane, Tri- und Tetra-Oximosilane, Silyamine wie Tris- und Tetrakis-(Alkylamino)-Silane. Bevorzugt sind Tris-(Alkylamino)-Monoalkylsilane, und Tetrakis-(Alkylamino)-Silane, die ohne weitere Katalysator- oder Metallverbindungszusatz zur Vernetzung führen. Bevorzugte Beispiele für Silamine und Aminosilane sind Tris-(n-Butylamin)-methylsilan $(CH_3CH_2CH_2CH_2N)_3SiCH_3$, Tris- (tertiär-Butylamin)-methylsilan $((CH_3)_3CN)_3SiCH_3$, Tris-(isoPropylamin))methylsilan, $((CH_3)_2HCN)_3SiCH_3$, Tris-(Cyclohexylamin)methylsilan, $((C_6H_{11}NH)_3SiCH_3$,

Bevorzugte erfindungsgemäße Beispiele sind aus 2 Komponenten A und B bestehende, durch Kondensationsreaktionen, bei Raumtemperatur oder bei erhöhter Temperatur, aushärtende Siliconmassen, die bevorzugt füllstofffrei sind.

Die erfindungsgemäß eingesetzte Komponente A ist ein kondensationsfähige Gruppen aufweisendes Organopolysiloxan und enthält vorzugsweise Einheiten der Formeln $SiO_{4/2}$, $R_3SiO_{1/2}$, $R_2SiO_{2/2}$ und $RSiO_{3/2}$ wobei R eine der oben für $R^1$ genannten Bedeutungen hat. Besonders bevorzugt sind solche Komponenten A der Formel A1

$$HO\text{-}[SiR_2O]_n\text{-}H \qquad (III),$$

worin

R gleich oder verschieden sein kann und eine für $R^1$ oben genannten Bedeutungen hat,

n eine ganze Zahl von mindestens 10, bevorzugt mindestens 30, besonders bevorzugt mindestens 100, ist.

Bevorzugt handelt es sich bei den erfindungsgemäß eingesetzten Organopolysiloxanen (A1) um α,ω-Dihydroxypolydimethylsiloxane.

Der Durchschnittswert für die Zahl n in Formel (III) ist vorzugsweise so gewählt, dass das Organopolysiloxan (A1) der Formel (III) eine Viskosität von 10 bis 250000 mPas, besonders bevorzugt von 1000 bis 100000 mPas, jeweils bei 25˚C, besitzt.

Obwohl in Formel (III) nicht angegeben, können bis zu 10 Molprozent der Diorganosiloxaneinheiten durch andere, meist jedoch nur als mehr oder weniger schwer vermeidbare Verunreinigungen vorliegende Siloxaneinheiten, wie $R_3SiO_{1/2}$-, $RSiO_{3/2}$- und $SiO_{4/2}$-Einheiten, ersetzt sein, wobei R die vorstehend dafür angegebene Bedeutung hat.

Die Polydiorganosiloxane gemäss Formel (III) sind handelsübliche Produkte oder können nach in der Fachwelt bekannten Verfahren, beispielsweise durch Polymerisation bzw. Kondensation niedermolekularer cyclischer bzw. linearer, hydroxy- und/oder alkoxyendblockierter Organopolysiloxane, hergestellt werden.

Bei dem erfindungsgemäß eingesetzten Organopolysiloxanharz (A2) handelt es sich bevorzugt um solche aus Einheiten der allgemeinen Formel

$$(R^2O)_gR_hSiO_{(4-g-h)/2} \qquad (IV),$$

wobei

R und $R^2$ unabhängig voneinander gleich oder verschieden sein können und eine der oben angegebenen Bedeutungen haben,

h 0, 1, 2 oder 3 ist und

g 0, 1, 2 oder 3 ist, mit der Maßgabe, dass die Summe aus g+h kleiner oder gleich 3 ist.

Bei dem erfindungsgemäß eingesetzten Organopolysiloxanharz (A2) handelt es sich bevorzugt um solches mit einem Molekulargewicht $M_w$ von 500 bis 100 000, bevorzugt von 1000 bis 20 000 und einer Viskosität von 10 mPas bis 10.000.000 mPas, bevorzugt 1.000 mPas bis 1.000.000 mPas, besonders bevorzugt von 10.000 mPas bis 500.000 mPas, bei 25˚C.

Obwohl durch die Formel (IV) nicht ausgedrückt, kann das Organopolysiloxanharz, bedingt durch seine Herstellung, bis zu 10 Gewichtsprozent Si-gebundene Chloratome enthalten.

Das erfindungsgemäß eingesetzte Organopolysiloxanharz (A2) ist ein handelsübliches Produkt oder kann nach an sich bekannten Verfahren, wie beispielsweise durch Kondensation von niedermolekularen Organopolysiloxanharzen in Suspension, hergestellt werden, wobei die niedermolekularen Organopolysiloxanharze darstellbar sind durch Solvolyse und Kondensation von einer Lösung der entsprechenden Silane mit Sigebundenen Chloratomen in einem mit Wasser nicht mischbaren Lösungsmittel mittels eines Alkohol/Wasser-Gemisches.

Anstelle des als Komponente (A2) eingesetzten Organopolysiloxanharzes kann auch kondensationsfähige Gruppen aufweisendes Organosilan und/oder dessen Teilhydrolysate eingesetzt werden.

Beispiele für Komponente (B) sind alle Organosilane, die bereits bisher in durch Kondensation vernetzenden Organopolysiloxanmassen eingesetzt werden können, wie etwa Alkoxy-, Acetoxy-, Amino- und Oximosilane. Bevorzugt sind Aminosilane, wie zum Beispiel oben beschrieben. Beispiele sind Silane, und monomere und oligomere Organosiliciumverbindungen, die in handelsüblichen 1-Komponenten Feuchtigkeits-härtenden Silicondichtstoff- und Klebstoffsystemen eingesetzt werden, wie zum Beispiel Tri- und Tetra-Alkoxysilane, wie Tri- und Tetra-methoxy und ethoxysilane, Tri- und Tetra-Acetoxysilane, Tri- und Tetra-Oximosilane, Silyamine wie Tris- und Tetrakis-(Alkylamino)-Silane. Bevorzugt sind Tris-(Alkylamino)-Monoalkyl-Silan, und Tetrakis-(Alkylamino)-Silan, die ohne weitere Katalysator- oder Metallverbindungszusatz zur Vernetzung führen.

Bevorzugte Beispiele für Silamine und Aminosilane sind Tris-(n-Butylamin)-methylsilan $(CH_3CH_2CH_2CH_2N)_3SiCH_3$, Tris- (tertiär-Butylamin)-methylsilan $((CH_3)_3CN)_3SiCH_3$, Tris(N-(isoPropylamin)) methylsilan, $((CH_3)_2HCN)_3SiCH_3$, Tris-(Cyclohexylamin)methylsilan, $((C_6H_{11}NH)_3SiCH_3)$.

Bevorzugte erfindungsgemäße Beispiele sind 1-Komponenten oder 2-Komponenten additionsvernetzbare flüssige und feste Siliconmassen, bevorzugt solche die füllstofffrei sind. Die Vernetzung erfolgt durch Additionsreaktion von olefinischen C=C Doppelbindungen und Siliciumwasserstoff Gruppen Si-H, bevorzugt unter Einwirkung eines Katalysators, wie Platin-, Paladium oder Ruthenium, bei Raumtemperatur oder Temperaturen von 10˚C bis 150˚C.

Erfindungsgemäße 2-Komponenten Siliconmassen bestehen aus Organopolysiloxanen (C), wobei es sich um lineare, cyclische oder verzweigte Siloxane mit mindestens 18 Siliciumatome handelt mit einer durchschnittlichen Viskosität von maximal 1000 Pas bei 25˚C handelt und mindestens einem aliphatischen ungesättigten Kohlenwasserstoffrest mit 2 bis 6 Kohlenstoffatomen, wie Vinylgruppen oder Allylgruppen oder Hexenylgruppen, bevorzugt enthalten die Organopolysiloxane (C) Methyl- und Vinylgruppen und aus Organopolysiloxanen (D) die Si-gebundene Wasserstoffatome aufweisen, und vorzugsweise cyclische, lineare und verzweigte Polysiloxane sind und vorzugsweise eine durchschnittliche Viskosität von 10 bis 20000 mPas bei 25˚C aufweisen, und bevorzugt mindestens 2 Si-H Gruppen enthalten, und bevorzugt 0,1 bis 1,7 Gew.% Sigebundenen Wasserstoff enthalten.

Als Katalysator können Verbindungen der Metalle Platin, Rhodium, Paladium, Iridium und Ruthenium, vorzugsweise Platin, eingesetzt werden.

d)

Filmbildende Polymere

Beispiele physikalische trocknende Lackbindemittel, wie z.B. Polyvinylchlorid und dessen Mischpolymerisate, Polyacrylate und deren Mischpolymerisate, Polyvinylacetate und Polyvinlybutyrale und deren Mischpolymerisate, Bitumen, Kohlenwasserstoffharze; Chlorkautschuke, Zylklokautschuk, Polyurethane, Epoxidharze, Epoxidharze-Polyester.

Bevorzugte Beispiele sind Siliconöle, wie organofunktionelle Siliconöle, besonders bevorzugt Aminoalkyl-funktionelle Polysiloxane und Polydimethylsiloxane und Siliconharze, besonders organofunktionelle Siliconharze, besonders bevorzugt Aminoalkyl-funktionelle Siliconharze.

Bevorzugte Beispiele sind Siliconcopolymere, und Hybridsysteme, die Organopolysiloxane und Siliciumatomfreie Polymere enthalten. Erfindungsgemäße bevorzugte Beispiele sind thermoplastische Siliconelastomere, die durch alpha-omega-Endterminierung mit 3-Aminoalkyldialkylsiloxyresten, wie 3-Aminopropyldimethylsiloxyresten und einem Grad der Endterminierung größer als 90%, bevorzugt größer als 95%, besonders bevorzugt größer als 99% bezogen auf die initialen OH-Endgruppen eines lineare alpha-omega endständigen OH-Polydimethylsiloxans, und anschließende Umsetzung der endstandenen alpha-omega endständiger Aminoalkylsiloxane mit Alkyldiisocyanaten, wie oben unter a) bis c) beschrieben, hergestellt wurden. Bevorzugt haben die thermoplastischen Siliconelastomere einen Siloxananteil von größer als 80Gew.%, bevorzugt größer als 90Gew.% und sind bevorzugt bei 25˚C fest und haben eine Viskosität von 10000 bis 100000 Pas bei einer Temperatur von 110˚C.

Kolloid-skalige Klebstoffe die Siliciumatome enthalten sind bevorzugt, insbesondere solche, die mehr als 5 Gew% Siliciumatome, besonders solche die mehr als 10 Gew% Siliciumatome, insbesonders solche, die mehr als 25 Gew% Siliciumatome enthalten.

e)

Des weiteren sind feinteilige Partikel, die reaktive Oberflächengruppen aufweisen, bevorzugt, wie zum Beispiel oben beschriebenen Partikel, die mit Silyliermittel modifiziert sind, um die reaktiven Oberflächengruppen zu erzielen.

Beispiele für erfindungsgemäße Silyliermittel mit reaktiven Gruppen werden im Folgenden angeführt.

Organosilane der Formel

$$R^5{}_m R^1{}_n SiX_1,$$

wobei m + n + 1 = 4,

n = 0, 1 oder 2

und m = 1, 2, oder 3 ist

oder Mischungen aus Silanen oder Organosilanen mit n = 0 bis 2 und m = 1 bis 3, wobei m = 1 bevorzugt ist.

$R^5$ bedeutet Wasserstoff oder ein einwertiger oder zweiwertiger, ein oder mehrere, gleiche oder verschiedene, Heteroatome Z enthaltender Kohlenwasserstoffrest mit 1 bis 12 C-Atomen, bevorzugt 3 bis 8 C-Atomen.

Der Kohlenwasserstoffrest kann Si-C gebunden oder Si-O-C gebunden vorliegen. Bevorzugt ist Si-C gebunden.

Handelt es sich um einen zweiwertigen Kohlenwasserstoffrest, so kann dieser an 2 Si-Atome gebunden sein oder ein Organo-Silan der Struktur

$$X_{4-n-m}R^1{}_n SiR^5{}_m SiR^1{}_n X_{4-n-m}.$$

aufweisen.

Das Heteroatom Z ist vorzugsweise ein Element der 3., 4. (nicht C), 5. und 6. Hauptgruppe im Periodensystem der Elemente. Bevorzugte Beispiele für Z sind: N, P, O und S. Vorzugsweise ist Z in C-Z Strukturen enthalten.

Beispiele für C-Z Strukturen sind:

Z = N:  C-NR$^6{}_2$ (Amin), e-NR$^6$-Si≡ (Amin) C=NR$^6$, (Imin) C(O)-N-, CR$^6$=N-, C(OR$^6$)=N-, C≡N (Nitril), C≡N=O (Cyanat), N=C=O (Isocyanat), C=N-OH (Hydroxylamin)

Z = P:  C-PR$^6{}_2$ (Phospine), C-P=O(-O-)$_2$, (Phosphonate, ihre Säure und ihre Ester) C-P=O(-O-)-C, (Phosphinate, ihre Säure und Ester)

Z = O:  C-O-H (Carbinol), C-O-C (Ether), C=O (Keton, Aldehyd), C(O)-O- (Carbonsäure(ester)), C(O)C= (Epoxidring)

Z = S:  C-S-H (Mercaptan), C-S-C (Sulfid), C-S$_x$-C (Poly-Sulfid mit X = 2,3,4,5,6,7 und 8), -C(S)-S- (Thiocarbonsäure), C-S(=O)-C (Sulfoxid), C-S(=O)$_2$ (Sulfon), C-S=O(-O-) (Sulfinsäure(ester)), C-S=O (-O-)$_2$ sulfonsäure (ester)),

-N=C=S (Isothiocyanat), -C≡N=S (Thiocyanat)

$R^6$ bedeutet Wasserstoff oder ein einwertiger Kohlenwasserstoffrest mit 1 bis 12 C-Atomen.

Beispiele für einwertige N-haltige Reste $R^5$ sind n-Aminoalkylreste, wie 3-Aminopropylreste, wobei die Aminopropylreste primäre, sekundäre und tertiäre Aminoreste sein können. Ein Beispiel für einen primären Aminoreste ist der 3-Aminopropylrest. Beispiele für sekundäre Aminoreste sind der Cyclohexyl-, Ethyl- oder Methyl-Amino-Propyl-Rest, Beispiele für tertiäre Aminoreste sind der Dimethyl- und der Diethyl-amino-propylrest und der Dipropyl- oder Dibutyl-aminomethylrest. Beispiele für gemischte primäre, sekundäre und tertiäre Aminoreste sind der Aminoethyl-3-Aminopropylrest, der Diethyl-amino-ethyl-amino-propylrest. Beispiele für weitere N-haltige Reste sind Alkyliminoreste, Alkylcyanoreste wie der 3-Cyanopropylrest, Alkylamidoreste, Alkylimidoreste, Alkylhydroxylaminoreste und Alkyloximoreste,

Beispiele für zweiwertige N-haltige Reste $R^5$ sind N,N'-Bis-(n-Alkyl)-Alkylendiamin-Reste, wie der N,N'-Bis-propyl-Ethylendiamin-Rest, der 1-(Piperazino)-alkylrest.

Beispiele für zweiwertige P-haltige Reste $R^5$ sind Phosphinatoalkylsilylreste, wie zum Beispiel die freie Säure oder das Natriumsalz des 2-Phosphinato-Bis-[ethyl-dimethylsilyl] Rests (z.B. $\equiv$Si-CH$_2$-CH$_2$-P(=O)(O$^-$Na$^+$)-CH$_2$-CH$_2$-Si$\equiv$)

Beispiele für einwertige P-haltige Reste $R^5$ sind Phosphonatoalkylreste, Phosphinatoalkylreste, als Säure und als deren Ester, wie Dialkoxy-Phosphonatoalkylreste, wie der 3-(Diethoxy-Phosphonato)-Propylrest und der 1-(Diethoxy-Phosphonato)-Methylrest.

Beispiele einwertige O-haltige Reste $R^5$ sind für Polyalkylenoxidreste und Polyalkylenoxid-Alkylreste, wie Carbinol- und Alkoxy-terminierte Polyalkylenoxidreste und Polyalkylenoxid-Alkylreste, wie Carbinol und Alkoxy-terminierte Polyethylenoxid-Alkylreste und Polypropylenoxid-Alkylreste, bevorzugt mit 3 bis 20 Kettengliedern, sind Acryloxyalkylreste, Alkylacryloxyalkylreste wie der 3-Methacryloxypropylrest und der 1-Methacryloxymethylrest, Carbinolreste, Etherreste wie Alkyloxyalkylreste, Glycidoxyalkylreste wie der 3-Glycidoxypropylrest, Säureanhydridalkylreste wie der Bernsteinsäureanhydrid-Propylrest, Alkylesteralkylreste wie der 3-Acetoxypropylrest, Isocyanatreste, wie der 3-Isocyanatopropylrest und der 1-Isocyanatomethylrest, und die zugehörigen geschützten Isocynatoreste mit zum Beispiel Isopropylamin oder Butoxim als Schutzgruppe.

Beispiele für einwertige S-haltige Reste $R^5$ sind der Mercaptoalkylreste wie der 3-Mercaptopropylrest, Isothiocyanatreste wie der 3-Isothiocyanatopropylrest, und überbrückte Di- und polysulfidalkylreste.

Besonders bevorzugt sind der 3-Aminoethyl-Aminopropylrest, der 3-Aminopropylrest, der 3-Diethylamino-propylrest, der 1-(Piperazino)-Methylrest, der 1-(Diethoxy-Phosphinato)-Methylrest, , der 3-Methacryloxypropylrest, 1-Methacryloxymethylrest der 3-Isothiocyanatopropylrest, der 3-Mercaptopropylrest, der 3-Isocyanatopropylrest, der isoPropylamin-geschützte 1-Isocyanatomethylrest, Wasserstoff.

Beispiele für reaktive enthaltende Silyliermittel sind solche, die bevorzugt aus Aminoethyl-Aminopropyltrimethoxysilan, Aminoethyl-Aminopropyltriethoxysilan,

aus Aminopropyltrimethoxysilan,
Aminopropyltriethoxysilan,
Diethylaminopropylmethyldimethoxysilan,
Diethylaminopropylmethyldiethoxysilan,
Cyclohexylaminopropyltrimethoxysilan,
Cyclohexylaminopropyldimethoxysilan,
N,N'Bis-trimethoxysilylpropyl-Ethylendiamin,
Azazyklen, wie N-[(3-aminopropyl)-dimethylsilyl]-2,2-dimethyl-1-aza-2-sila-cyclopentan,
1-(Piperazino)-Methyl-trimethoxysilan,
1-(Diethoxy-Phosphinato)-Methyl-trimethoxysilan
3-glycidoxypropyltrimethoxysilan,
3-Bernsteinsäure-Propopyltrimethoxysilan,
3-Mercaptopropyltrimethyoxysilan,
3-Methacryloxypropyltriethoxysilan,
1-Methacryloxymethyldimethylmethoxysilan,
1-Methacryloxymethyldimethylethoxysilan,
3-Thioisocyanatopropyltrimethoxysilan,
3-Thioisocyanatopropyltriethoxysilan,

Hydroxylethylenglykol-propyldimethyl-endständige Polydimethylsiloxane mit einer Viskosität von größer als 500 mPas, das Natriumsalz von Phosphinato-Siliciumverbindungen der Struktur P (O$_2$Na) [C$_2$H$_4$Si (CH$_3$)$_2$OSi (CH$_3$)$_2$C$_2$H$_4$Si (OCH$_3$)$_3$]$_2$ = Phosphinato-Bis-[ethyl-dimethylsiloxy-ethyl-trialkoxysilan und P (O$_2$Na) [C$_2$H$_4$Si (CH$_3$)$_2$OSi (CH$_3$)$_2$C$_2$H$_4$]$_n$, und 1- (Diethoxy-Phosphonato) - Methyl-Triethoxysilan ausgewählt werden.

Besonders bevorzugt ist N-[(3-aminopropyl)-dimethylsilyl]-2,2-dimethyl-1-aza-2-sila-cyclopentan.

Organosiloxane aufgebaut aus einer oder mehreren, gleichen oder verschiedenen Einheiten der Formel

$$R^5_q R^1_r SiO_{(4-q-r)/2}, \text{ und/oder}$$

wobei
q = 0, 1, 2 oder 3
r = 0, 1 oder 2
und q + r < 4 ist.

Die Anzahl von diesen Einheiten in einem Organosiloxan beträgt mindestens 2.

Organosiloxane sind bevorzugt bei Belegungstemperatur flüssig. Bei solchen mit einer Viskosität mit größer als 1000 mPas sind solche bevorzugt, die sich in einem technisch handhabbaren Lösungsmittel (wie oben definiert) mit einer Konzentration >10% und einer Mischungsviskosität kleiner als 1000 mPas bei Belegungstemperatur lösen lassen.

Unter bei Belegungstemperatur festen Organosiloxanen sind solche bevorzugt, die sich in einem technisch handhabbaren Lösungsmittel mit einer Konzentration größer als 10% und einer Mischungsviskosität kleiner als 1000 mPas bei Belegungstemperatur lösen lassen.

Die Silyliermittel können allein oder in beliebigen Gemischen eingesetzt werden.

Herstellung der Suspension.

Die pyrogenen Kieselsäurepartikel können zur Herstellung der erfindungsgemäßen Suspensionen in die Flüssigkeit zugegeben werden und werden durch Benetzung verteilt, oder durch Schütteln, wie mit einem Taumelmischer, oder einem High Speed Mixer, oder durch Rühren. Bei geringen Partikelkonzentrationen reicht im Allgemeinen einfaches Rühren zur Einarbeitung der Partikel in die Flüssigkeit. Bevorzugt vor allem hohen Partikelkonzentrationen ist das Einarbeiten und Dispergieren der Partikel in die Flüssigkeit bei sehr hohem Schergefälle. Das Dispergieren kann in üblichen, zur Herstellung von Emulsionen bzw. Suspensionen geeigneten Mischgeräten, die einen ausreichend hohe Eintrag von Scherenergie leisten, wie beispielsweise schnelllaufende Stator-Rotor-Rührgeräte, wie z.B. nach Prof. P. Willems, bekannt unter dem registrierten Warenzeichen "Ultra-Turrax", oder anderen Stator-Rotor-Systemen, bekannt unter dem registrierten Warenzeichen wie Kady, Unimix, Koruma, Cavitron, Sonotron, Netzsch oder Ystral erfolgen. Andere Verfahren sind Kugelmühlen, wie z.B. Dyno-Mill von WAB, CH. Weitere Verfahren sind schnelllaufende Rührer, wie Flügelrührer oder Balkenrührer, Dissolver, z.B. mit Umlaufgeschwindigkeiten von 1-50 m/s, wie Scheibendissolver z.B. der Firma Getzmann, oder Mischsysteme wie Planetendissolver, Balkendissolver oder andere kombinierte Aggregate aus Dissolver- und Rührersystemen. Andere geeignete Systeme sind Extruder oder Kneter.

Dies kann in diskontinuierlichen und in kontinuierlichen Verfahren erfolgen.

Im besonderen geeignet sind Systeme, die zunächst mit effektiven Rührorganen die Benetzung und Einarbeitung der Kieselsäure in die Flüssigkeit erzielen, z.B. in einem geschlossenen Behältnis oder Kessel, und in einem zweiten Schritt die Kieselsäure bei sehr hohem Schergefälle dispergieren. Dies kann durch ein Dispergiersystem in dem ersten Behältnis geschehen, oder durch Umpumpen in einer externen Rohrleitung, die ein Dispergierorgan enthält, aus dem Behältnis unter bevorzugt geschlossener Rückführung in das Behältnis. Durch eine teilweise Rückführung, und teilweise kontinuierliche Entnahme kann dieser Prozess bevorzugt kontinuierlich gestaltet werden.

Insbesondere geeignet ist zur Dispergierung der Kieselsäure in der erfindungsgemäßen Suspension der Einsatz von Ultraschall im Bereich von 5 Hz bis 500 kHz, bevorzugt 10 kHz bis 100 kHz, ganz besonders bevorzugt 15 kHz bis 50 kHz; die Ultraschalldispergierung kann kontinuierlich oder diskontinuierlich erfolgen. Dies kann durch einzelne Ultraschallgeber, wie Ultraschallspitzen, geschehen, oder in Durchflußsystemen, die einen oder mehrere Ultraschallgeber enthalten, wie Ultraschallverfahren wie Ultraschall Finger und Geber, oder Ultraschall Durchflußzellen, oder Ultraschall Systemen wie oder analog denen die von Sonorex /Bandelin angeboten werden. Ultraschalldispergierung kann kontinuierlich oder diskontinuierlich erfolgen.

Das erfindungsgemäße Verfahren zur Dispergierung von pyrogenen Kieselsäurepartikel in einer Flüssigkeit kann diskontinuierlich wie auch kontinuierlich durchgeführt werden. Selbstverständlich kann die erfindungsgemäße Suspension auch auf andere Weise hergestellt werden. Es hat sich jedoch gezeigt, dass die Verfahrensweise kritisch ist und nicht alle Herstellungsarten stabile Suspensionen ergeben.

Die erfindungsgemäßen Verfahren haben den Vorteil, dass sie sehr einfach in der Durchführung sind und wässrige Suspensionen mit sehr hohen Feststoffgehalten hergestellt werden können.

Der Kolloid-skalige Klebstoff, wie reaktives Monomer, reaktives Oligomer oder Polymer, Vernetzungssysteme, Film-bildende Polymere, kann vor, während oder nach Zugabe und Dispergierung der Partikel zugefügt werden. Dies kann mit nieder- aber auch mit mittel- und hochscherenden Systemen erfolgen.

Pyrogene Kieselsäure-Partikel mit reaktiven Oberflächengruppen können vor, während oder nach Zugabe und Dispergierung der Partikel zugefügt werden. Die Dispergierung erfolgt vorzugsweise wie oben für die Partikel beschrieben.

Verwendung der erfindungsgemäßen Suspensionen

Die erfindungsgemäßen Suspensionen können erfindungsgemäß zur Herstellung poröser Formkörper und Schichten verwendet werden.

Beispiele der Verwendung poröser Formkörper sind die Verwendung als Katalysatorträger, als Adsorbens und Absorbens für Wirkstoffe, als Adsorbens und Absorbens für Schadstoffe, als Adsorbens und Absorbens für Geruchsstoffe und Gerüche.

Beispiele der Verwendung poröser Schichten sind die Verwendung als Druckmedium für die Aufnahme und Fixierung von Tinte, vor allem Tintenstrahldruck, insbesondere für den digitalen Druck, als Beschichtung von Flächen in Kontakt mit Meerwasser oder Binnengewässer, dadurch gekennzeichnet, dass sie eine erfindungsgemäß poröse Beschichtung aufweist. Beispiele für beschichtete Flächen sind Schiffe, Schiffsrümpfe, Boote, Yachten, Bohrinseln, Hafenanlagen, Netze für Aquakulturen, Schleusen, als Beschichtung von Schiffen, mit nano- und micronskalig rauen und/oder lufthaltigen Beschichtungen, zur Verhinderung der Ansiedlung von Bakterien, Algen, Pflanzen, Pilzen und Tiere, wie Seepocken, Entenmuscheln, und anderen, mit dem Vorteil einer längeren Nutzungsdauer von zum Beispiel von Netzen für Fisch- und Schalentierfarmen, in marinen und fluvialen und Binnen-Gewässern, und zur Erniedrigung des Reibungswiderstandes von Schiffen, mit dem Vorteil einer höheren Geschwindigkeit und/oder geringen Energieverbrauchen, z.B. geringerem Treibstoffverbrauch, damit Schonung natürlicher Resourcen und geringere Kosten.

Überraschenderweise wird durch die erfindungsgemäße Beschichtung eine Luft-Wasser-Grenzfläche erzeugt.

Erfindungsgemäß werden die Suspension zur Beschichtung von Flächen in Kontakt mit Meerwasser oder Binnenwässern, wie Oberflächen von Schiffen und Schiffsrümpfen, Booten, Yachten, marinen Konstruktionen, wie Schleusen oder Hafenanlage am Meer und an Binnen- und Küstengewässern, Netzen für Aquakultur von Fischen und Krustentieren, im Meerwasser und in Binnengewässern, zum Beispiel zu Verhinderung des Algenbewuchses und des Bewuchses mit sessilen Tieren, wie Seepocken, als Beschichtung auf Schiffs- und Boot- und Yachtrümpfen zur Erniedrigung des Reibungswiderstandes, als lufthaltige Strukturen in Farben und Lacken, oder in Fasern, zur Erniedrigung des spezifischen Gewichts und zur Wärmedämmung eingesetzt.

Beispiele

Beispiel 1)

In 556,7 g iso-Propanol werden 84,7 g einer hochhydrophoben mit Trimethylsiloxygruppen modifizierten pyrogenen Kieselsäure, hergestellt durch Reaktion einer hydrophilen pyrogenen Kieselsäure mit spezifischen Oberfläche nach BET von 300 m$^2$/g und Hexamethyldisilazan (erhältlich unter dem Namen HDK H30RM bei Wacker-Chemie GmbH, München, Deutschland) und 5,0 g einer mit 3-Aminopropyldimethylsiloxygruppen modifizierten pyrogenen Kieselsäure (erhältlich unter dem Namen HDK H30RA bei Wacker-Chemie GmbH, München, Deutschland) mit einem Zahnscheibendissolver Ultra Turrax während 5 Min bei 5000 Umdrehungen pro Minute dispergiert. Anschließend werden 3,6 g eines OH-endständigen Polydimethylsiloxans mit einer Viskosität von 80 Pas bei 25°C und 0,04 g Tris(n-Butylamin) methylsilan in 200 g Methylethylketon mit einem Flügelrührer und anschließend 150 g iso-Propanol eingemischt. Im Anschluß wird während 20 Min mit einer Perlmühle nachdispergiert.

Die Suspension ist weitgehend klar und weist einen Grindometerwert von 15 μm auf.

Beispiel 2)

In 556,7 g iso-Propanol werden 84,7 g einer hochhydrophoben mit Trimethylsiloxygruppen modifizierten pyrogenen Kieselsäure, hergestellt durch Reaktion einer hydrophilen pyrogenen Kieselsäure mit spezifischen Oberfläche nach BET von 300 m$^2$/g und Hexamethyldisilazan (erhältlich unter dem Namen HDK H30RM bei Wacker-Chemie GmbH, München, Deutschland) und 5,0 g einer mit 3-Aminopropyldimethylsiloxygruppen modifizierten pyrogenen Kieselsäure (erhältlich unter dem Namen HDK H30RA bei Wacker-Chemie GmbH, München, Deutschland) mit einem Zahnscheibendissolver Ultra Turrax während 5 Min bei 5000 Umdrehungen pro Minute dispergiert. Anschließend werden 3,6 g eines thermoplastischen Siliconelastomers mit einem Siloxananteil von größer als 90 Gew.% und einer Schmelzviskosität von 17500 Pas bei 150°C (erhältlich bei Wacker-Chemie GmbH, D, unter dem Namen Geniomer 140) in 200 g Methylethylketon mit einem Flügelrührer und anschließend 150 g iso-Propanol eingemischt. Im Anschluß wird während 20 Min mit einer Perlmühle nachdispergiert.

Die Suspension ist weitgehend klar und weist einen Grindometerwert von 15 μm auf.

Beispiel 3)

In 556,7 g iso-Propanol werden 84,7 g einer hochhydrophoben mit Trimethylsiloxygruppen modifizierten pyrogenen Kieselsäure, hergestellt durch Reaktion einer hydrophilen pyrogenen Kieselsäure mit spezifischen Oberfläche nach BET von 300 m$^2$/g und Hexamethyldisilazan (erhältlich unter dem Namen HDK H30RM bei Wacker-Chemie GmbH, München, Deutschland) und 5,0 g einer mit 3-Aminopropyldimethylsiloxygruppen modifizierten pyrogenen Kieselsäure (erhältlich unter dem Namen HDK H30RA bei Wacker-Chemie GmbH, München, Deutschland) mit einem Zahnscheibendissolver Ultra Turrax während 5 Min bei 5000 Umdrehungen pro Minute dispergiert. Anschließend werden 3,6 g eines Aminopropyl-funktionellen Siliconharzes erhältlich bei Wacker-Chemie GmbH, D unter dem Namen Silres HP2000) in 200 g Methylethylketon mit einem Flügelrührer und anschließend 150 g iso-Propanol eingemischt. Im Anschluß wird während 20 Min mit einer Perlmühle nachdispergiert.

Die Suspension ist weitgehend klar und weist einen Grindometerwert von 5 μm auf.

Beispiel 4)

In 556,7 g iso-Propanol werden 84,7 g einer hochhydrophoben mit Trimethylsiloxygruppen modifizierten pyrogenen Kieselsäure, hergestellt durch Reaktion einer hydrophilen pyrogenen Kieselsäure mit spezifischen Oberfläche nach BET von 300 m$^2$/g und Hexamethyldisilazan (erhältlich unter dem Namen HDK H30RM bei Wacker-Chemie GmbH, München, Deutschland) und 5,0 g einer mit 3-Aminopropyldimethylsiloxygruppen modifizierten pyrogenen Kieselsäure (erhältlich unter dem Namen HDK H30RA bei Wacker-Chemie GmbH, München, Deutschland) mit einem Zahnscheibendissolver Ultra Turrax während 5 Min bei 5000 Umdrehungen pro Minute dispergiert. Anschließend werden 3,6 g eines Aminopropyl-funktionellen Siliconöls mit einer Viskosität von 4000 mPas bei 25˚C (erhältlich bei Wacker-Chemie GmbH, D unter dem Namen BELSIL ADM 1100) in 200 g Methylethylketon mit einem Flügelrührer und anschließend 150 g iso-Propanol eingemischt. Im Anschluß wird während 20 Min mit einer Perlmühle nachdispergiert.

Die Suspension ist weitgehend klar und weist einen Grindometerwert von 5 μm auf.

Beispiel 5)

In 550 g iso-Propanol werden 85 g einer hochhydrophoben mit Trimethylsiloxygruppen und Vinyldimethylsiloxygruppen (Vinyl:Methyl = 0,1) modifizierten pyrogenen Kieselsäure, hergestellt durch Reaktion einer hydrophilen pyrogenen Kieselsäure mit spezifischen Oberfläche nach BET von 300 m$^2$/g und Hexamethyldisilazan und Divinyltetramethyldisilazan, mit einem Zahnscheibendissolver Ultra Turrax während 5 Min bei 5000 Umdrehungen pro Minute dispergiert. Anschließend werden 40 g eines Si-H funktionellen Siloxans mit einer mittleren Kettenlänge von 100 Si-Atomen und einem Silicium-gebundenen Wasserstoffgehalt von 0,5 Gew% und 1,6 g Ethinylcyclohexanol in 200 g Methylethylketon mit einem Flügelrührer und anschließend 150 g iso-Propanol eingemischt. Im Anschluß wird während 20 Min mit einer Perlmühle nachdispergiert.

Die Suspension ist weitgehend klar und weist einen Grindometerwert von 5 μm auf.

Nach einem Tag Lagerung wird 1,6 g eines Platin-haltigen Katalysators zugemischt (erhältlich bei Wacker-Chemie GmbH, D unter dem Namen Katalysator OL), und dann mit einem Rakel auf Glas appliziert.

Beispiel 6)

Die Suspensionen aus den Beispielen 1 bis 5 werden auf eine Glasplatte aufgerakelt, und anschließend während 24 Stunden abgetrocknet, bei 25˚C und ca. 50% relativer Luftfeuchtigkeit. Nach 24 Stunden Lagerung wird das Aussehen, die mechanische Festigkeit, die Dicke der Beschichtung, die Hydrophobie und der Luftgehalt der Beschichtung bewertet.

Tabelle 1

| Suspension aufgerakelt auf Glas | Aussehen | mechanische Festigkeit | Dic ke | Hydrophobie | Luftgehalt der Beschichtung |
|---|---|---|---|---|---|
| Beispiel 1 | matt | Stabil gegen Reiben mit Finger | Ca. 20 μm | Wassertropfen perlen ab | Porös und silbrig unter Wasser |
| Beispiel 2 | matt | Stabil gegen Reiben mit Finger | Ca. 20 μm | Wassertropfen perlen ab | Porös und silbrig unter Wasser |

| | | | | | |
|---|---|---|---|---|---|
| Beispiel 3 | matt | Stabil gegen Reiben mit Finger | Ca. 20 $\mu$m | Wassertropfen perlen ab | Porös und silbrig unter Wasser |
| Beispiel 4 | matt | Stabil gegen Reiben mit Finger | Ca. 20 $\mu$m | Wassertropfen perlen ab | Porös und silbrig unter Wasser |

(fortgesetzt)

| Suspension aufgerakelt auf Glas | Aussehen | mechanische Festigkeit | Dic ke | Hydrophobie | Luftgehalt der Beschichtung |
|---|---|---|---|---|---|
| Beispiel 5 | matt | Stabil gegen Reiben mit Finger | Ca. 20 $\mu$m | Wassertropfen perlen ab | Porös und silbrig unter Wasser |

**Patentansprüche**

1. Poröser Formkörper oder poröse Beschichtung, **dadurch gekennzeichnet, dass** sie zumindest auf einer Suspension aufbauen enthaltend

    - feinteilige pyrogene Kieselsäurepartikel in Mengen von 0,01 - 50 Gew.%, wobei die Partikel eine fraktale Dimension der Masse $D_m$ von kleiner oder gleich als 2,8 aufweisen
    - Flüssigkeit
    - Kolloid-skaliger Klebstoff.

2. Poröser Formkörper oder poröse Beschichtung nach Anspruch 1, **dadurch gekennzeichnet, dass** die feinteiligen Partikel der Suspension, reaktive Oberflächengruppen aufweisen.

3. Poröser Formkörper oder poröse Beschichtung nach Anspruch 1 oder 2, **dadurch gekennzeichnet, dass** die feinteiligen Partikel der Suspension hydrophobe Partikel sind.

4. Poröser Formkörper oder poröse Beschichtung nach Anspruch 1 bis 3, **dadurch gekennzeichnet, dass** der Kolloid-skalige Klebstoff der Suspension ein reaktives Monomer enthält.

5. Poröser Formkörper oder poröse Beschichtung nach Anspruch 1 bis 3, **dadurch gekennzeichnet, dass** der Kolloid-skalige Klebstoff der Suspension reaktives Oligomer oder Polymer enthält.

6. Poröser Formkörper oder poröse Beschichtung nach Anspruch 1 bis 3, **dadurch gekennzeichnet, dass** der Kolloid-skalige Klebstoff der Suspension ein Vernetzungssystem enthält.

7. Poröser Formkörper oder poröse Beschichtung nach Anspruch 1 bis 3, **dadurch gekennzeichnet, dass** der Kolloid-skalige Klebstoff der Suspension ein filmbildendes Polymere enthält.

8. Poröser Formkörper oder poröse Beschichtung, **dadurch gekennzeichnet, dass** sie beliebige Mischungen von Suspensionen nach einem oder mehreren der Ansprüche 1 bis 7 enthält.

9. Katalysatorträger, **dadurch gekennzeichnet, dass** er einen porösen Formkörper nach den Ansprüchen 1-8 aufweist.

10. Adsorbens für Wirkstoffe, Schadstoffe, Geruchstoffe und Gerüche, **dadurch gekennzeichnet, dass** es einen porösen Formkörper nach den Ansprüchen 1-8 aufweist.

11. Druckmedium, **dadurch gekennzeichnet, dass** es eine poröse Beschichtung nach den Ansprüchen 1-8 aufweist.

12. Beschichtung von Flächen in Kontakt mit Meerwasser oder Binnengewässer, **dadurch gekennzeichnet, dass** sie eine poröse Beschichtung nach den Ansprüchen 1-8 aufweist.

**Claims**

1. Shaped porous article or porous coating **characterized in that** they are based at least on a suspension comprising

    - finely divided pyrogenic silica particles in amounts of 0.01% - 50% by weight, the particles having a fractal mass dimension $D_m$ of less than or equal to 2.8

- liquid
- colloid-scale adhesive.

**2.** Shaped porous article or porous coating according to Claim 1, **characterized in that** the finely divided particles of the suspension have reactive surface groups.

**3.** Shaped porous article or porous coating according to Claim 1 or 2, **characterized in that** the finely divided particles of the suspension are hydrophobic particles.

**4.** Shaped porous article or porous coating according to Claim 1 to 3, **characterized in that** the colloid-scale adhesive of the suspension comprises a reactive monomer.

**5.** Shaped porous article or porous coating according to Claim 1 to 3, **characterized in that** the colloid-scale adhesive of the suspension comprises reactive oligomer or polymer.

**6.** Shaped porous article or porous coating according to Claim 1 to 3, **characterized in that** the colloid-scale adhesive of the suspension comprises a crosslinking system.

**7.** Shaped porous article or porous coating according to Claim 1 to 3, **characterized in that** the colloid-scale adhesive of the suspension comprises a film-forming polymer.

**8.** Shaped porous article or porous coating **characterized in that** it comprises any desired mixtures of suspensions according to one or more of Claims 1 to 7.

**9.** Catalyst support **characterized in that** it comprises a shaped porous article according to Claims 1-8.

**10.** Adsorbent for actives, noxious substances, odorous substances, and odors, **characterized in that** it comprises a shaped porous article according to Claims 1-8.

**11.** Print medium **characterized in that** it comprises a porous coating according to Claims 1-8.

**12.** Coating on surfaces in contact with marine water or inland water, **characterized in that** it comprises a porous coating according to Claims 1-8.

**Revendications**

**1.** Corps moulé poreux ou revêtement poreux, **caractérisés en ce qu'**ils sont à base d'au moins une suspension contenant

   - des particules finement divisées d'acide silicique pyrogéné, en quantités de 0,01 - 50 % en poids, les particules présentant une dimension fractale de la masse $D_m$ inférieure ou égale à 2,8
   - un liquide
   - un adhésif à l'échelle colloïdale.

**2.** Corps moulé poreux ou revêtement poreux selon la revendication 1, **caractérisé en ce que** les particules finement divisées de la suspension comportent des groupes superficiels réactifs.

**3.** Corps moulé poreux ou revêtement poreux selon la revendication 1 ou 2, **caractérisé en ce que** les particules finement divisées de la suspension sont des particules hydrophobes.

**4.** Corps moulé poreux ou revêtement poreux selon les revendications 1 à 3, **caractérisé en ce que** l'adhésif à l'échelle colloïdale de la suspension contient un monomère réactif.

**5.** Corps moulé poreux ou revêtement poreux selon les revendications 1 à 3, **caractérisé en ce que** l'adhésif à l'échelle colloïdale de la suspension contient un oligomère ou polymère réactif.

**6.** Corps moulé poreux ou revêtement poreux selon les revendications 1 à 3, **caractérisé en ce que** l'adhésif à l'échelle colloïdale de la suspension contient un système de réticulation.

7. Corps moulé poreux ou revêtement poreux selon les revendications 1 à 3, **caractérisé en ce que** l'adhésif à l'échelle colloïdale de la suspension contient un polymère filmogène.

8. Corps moulé poreux ou revêtement poreux, **caractérisé en ce qu'**il contient des mélanges quelconques de suspensions selon une ou plusieurs des revendications 1 à 7.

9. Support de catalyseur, **caractérisé en ce qu'**il comporte un corps moulé poreux selon les revendications 1-8.

10. Adsorbant pour substances actives, substances nocives, substances odorantes et odeurs, **caractérisé en ce qu'**il comporte un corps moulé poreux selon les revendications 1-8.

11. Support d'impression, **caractérisé en ce qu'**il comporte un revêtement poreux selon les revendications 1-8.

12. Revêtement de surfaces en contact avec de l'eau de mer ou de l'eau continentale, **caractérisé en ce qu'**il comporte un revêtement poreux selon les revendications 1-8.